# EUROPÄISCHE PATENTSCHRIFT

(11) **EP 1 469 986 B1**
(45) Veröffentlichungstag und Bekanntmachung des Hinweises auf die Patenterteilung: **12.07.2006**
(21) Anmeldenummer: 03708001.7
(22) Anmeldetag: 23.01.2003
(51) Int. Cl.: B29C 70/54

(54) **VERFAHREN UND VORRICHTUNGEN ZUR HERSTELLUNG VON FASERVERSTÄRKTEN BAUTEILEN**
METHOD AND DEVICES FOR PRODUCING FIBRE-REINFORCED COMPONENTS
PROCÉDÉ ET DISPOSITIFS DE FABRICATION DE PIÈCES RENFORCÉES PAR DES FIBRES

(30) Priorität: 31.01.2002 DE 10203975
(43) Veröffentlichungstag der Anmeldung: 27.10.2004
(73) Patentinhaber: EADS Deutschland GmbH, 85521 Ottobrunn (DE)
(72) Erfinder: LIPPERT, Thomas, 86179 Augsburg (DE); SCHRÖDER, Hans-Wolfgang, 88090 Immenstaad (DE); STADLER, Franz, 85113 Böhmfeld (DE); UTECHT, Stefan, 86916 Kaufering (DE)
(86) Internationale Anmeldenummer: PCT/DE2003/000177
(87) Internationale Veröffentlichungsnummer: WO 2003/064143

(56) Entgegenhaltungen:
- DE-C- 10 013 409
- US-A1- 2002 020 934

## Beschreibung

Die Erfindung betrifft einen Injektions-Aufbau nach dem Oberbegriff des Patentanspruchs 1 sowie ein Verfahren zur Herstellung von faserverstärkten Kunststoff-Bauteilen.

Bei der Herstellung von Faserverbundbauteilen, im folgenden FV-Bauteile genannt, mittels Harzinjektions-Verfahren kann es durch im Matrix-Material enthaltene Gasblasen, gelöste Gase und sonstige flüchtige Bestandteile zur Bildung von Poren kommen. Dadurch wird die Qualität der Bauteile gemindert; bis hin zur Unbrauchbarkeit.

Aus dem deutschen Patent DE 100 13 409 C1 ist gemäß dem Oberbegriff des Anspruchs 1 eine Vorrichtung bzw. ein Verfahren zur Herstellung von faserverstärkten Kunststoff-Bauteilen aus trockenen Faserverbund-Halbzeugen mittels eines Injektionsverfahrens zur Injektion von Matrix-Material mit einer Gas-durchlässigen und Matrixmaterial-undurchlässigen Membran, die zumindest einseitig um das Halbzeug herum angeordnet ist und einen ersten Raum bildet und in den Matrix-Material einführbar ist, mit einer an einer Oberfläche des Halbzeugs angeordneten Fließhilfe, mit einem am ersten Raum anliegenden zweiten, gegenüber einem Werkzeug abgedichteten Raum, der von der Umgebung mittels einer gas- und Matrixmaterial-undurchlässigen Folie abgegrenzt ist, wobei bei Absaugen von Luft aus dem zweiten Raum, Matrix-Material aus dem Vorratsbehälter in den evakuierten ersten Raum gesaugt wird und die Fließhilfe eine Verteilung des Matrixmaterials über der dieser zugewandten Oberfläche des Halbzeugs und ein Eindringen desselben senkrecht in das Halbzeug bewirkt.

Bei diesem Verfahren wird das Matrix-Material mittels einer Fließhilfe über das Faserverbund-Halbzeug verteilt und dringt von dort aus in das Halbzeug ein. Die Fließhilfe wird einseitig von der Gas-durchlässigen und Matrixmaterialundurchlässigen Membran begrenzt. Bei dem Transport des Matrix-Materials in der dünnen Fließhilfe erfolgt eine Entgasung des Matrix-Materials. Die Entgasung erfolgt durch die an die Fließhilfe angrenzende Membran hindurch in die evakuierte zweite Kammer. Zur wirksamen Entgasung ist es erforderlich, dass das Matrix-Material zunächst eine hinreichend große Stecke durch die Fließhilfe laufen kann, bevor es in das Halbzeug eintritt.

Bei den vielfach verwendeten Anguss-Anordnungen zur Einleitung des Matrix-Materials in die Fließhilfe findet eine derartige Filmentgasung unmittelbar unter den Angüssen nicht und in den daran direkt anschließenden Bereichen nur unvollkommen statt. Dementsprechend ist unter den Angüssen und in den daran anschließenden Bereichen die Wahrscheinlichkeit größer, dass es dort zur Porenbildung kommt.

Ein weiterer Nachteil dieses Verfahrens liegt darin, daß die Verwendung von zwei Kammern einen größeren Aufwand an Hilfsstoffen für die Membran gegenüber dem in der Faserverbundtechnik ebenfalls bekannten Einkammerprinzip erfordert.

Die Entgasung des Matrix-Materials kann außerdem nach einem aus dem allgemeinen Stand der Technik bekannten Verfahren erfolgen, bei dem das Matrix-Material in einem evakuierten Raum in einer dünnen Schicht (Film) umgegossen wird. Ein derartiger Entgasungsprozess ist generell umso effektiver, je dünner die zu entgasende Matrix-Materialschicht ist. Dieses auch FilmEntgasung genanntes Verfahren zur Entgasung des Matrix-Materials hat beispielsweise folgende Nachteile:
- Der zusätzliche Entgasungsschritt ist ungünstig hinsichtlich Kosten und weiterer Aufwände.
- Das Matrix-Material muss für den Entgasungsschritt erwärmt werden. Dadurch treten Alterungsvorgänge auf.
- Das Matrix-Material kann vor der späteren Verarbeitung zu Faserverbundbauteilen erneut flüchtige Bestandteile aufnehmen, z.B. Wasserdampf aus der Luft.
- Das Matrix-Material kann im Zuge des Injektionsprozesses mit Hilfsstoffen unter Gasentwicklung reagieren. So wurden Reaktionen mit kostengünstigen flexiblen Silikonprofilen für Angüsse beobachtet.

Es ist die Aufgabe der Erfindung, ein Verfahren und einen Injektions-Aufbau zur Herstellung von FV-Bauteilen bereitzustellen, bei denen bzw. mit denen eine vorteilhafte Entgasung von Matrix-Material bei der Herstellung von FV-Bauteilen erfolgt.

Diese Aufgabe wird mit den Merkmalen der unabhängigen Ansprüche gelöst. Weitere Ausführungsforen sind in den Unteransprüchen angegeben.

Erfindungsgemäß ist ein Injektions-Aufbau mit einem Faserverbund-Halbzeugs zur Herstellung eines Faseverbund-Bauteils vorgesehen, die eine Anguss-Vorrichtung zur Zuführung von Matrixmaterial, ein Verteilergewebe sowie eine für das Matrixmaterial undurchlässigen Sperrschicht aufweist, wobei das Verteilergewebe zwischen der Anguß-Vorrichtung und dem Faserverbund-Halbzeug und die Sperrschicht zwischen dem Verteilergewebe und dem Faserverbund-Halbzeug angeordnet sind.

Erfindungsgemäß ist eine Entgasung mit Hilfe eines Matrix-Materialundurchlässigen Hilfsstoffes oder Verteilergewebes in Kombination mit einer zwischen diesem und dem Faserverbund-Halbzeug gelegenen Sperrschicht vorgesehen. Eine derartige Sperrschicht kann aus einer PTFE-Folie, einem Klebstoff und/oder einem Kaschiergewebe oder in Form eines Sandwichaufbaus aus diesen Materialien realisiert sein.

Dadurch kann die Wahrscheinlichkeit des Auftretens von Poren verringert und - als Folge - die Robustheit der Fertigung erhöht werden.

Die Erfindung kann in Kombination mit der Vorrichtung bzw. mit dem Verfahren nach dem deutschen Patent DE 100 13 409 C1 oder mit anderen Vorrichtungen oder Verfahren nach dem Stand der Technik erfolgen. Die Erfindung kann in Verbindung mit einem Einkammer-Aufbaus und in Verbindung mit einem Zweikammer-Aufbaus verwendet werden.

Im folgenden wird die Erfindung an Hand der beiliegenden Figuren beschrieben, die zeigt:
- ein beispielhafter Injektions-Aufbau mit einer Ausführungsform der erfindungsgemäßen Entgasungs-Vorrichtung, wobei in der Figur nur eine erste Kammer eines Zwei-Kammeraufbaus des Injektions-Aufbaus dargestellt ist.

Erfindungsgemäß ist eine Entgasungs-Vorrichtung für das bei der Herstellung von FV-Bauteilen verwendete Matrix-Material vorgesehen. In einer Ausführungsform der Erfindung wird das Matrix-Material vor dem Eintritt oder Eindringen in das zu infiltrierende textile Gelege aus Fasern oder Verstärkungsfasem mittels zumindest einer Harz-undurchlässigen Folie oder Sperr-Folie in Verbindung mit einem Verteilergewebe oder einer Fließhilfe entgast. Dabei handelt es sich um eine ein- oder mehrschichtige Folie, die das Matrix-Material nicht durchlassen. Die Folie kann gasförmige Bestandteile des Matrix-Materials durchlassen oder kann gasundurchlässig sein. Diese Ausführungsform befindet sich in einem Aufbau mit dem Faserverbund-Gelege oder einer Bauteil-Herstellungsvorrichtung mit dem textilen Gelege, d.h. diese ist räumlich in dem Aufbau mit dem Faserverbund-Gelege integriert.

Als in diesem Zusammenhang als textiles Gewebe bezeichnetes Material wird ein trockenes oder vorbehandeltes Faserverbund-Gewebe oder -Gelege verstanden, aus dem nach einer Harz-Infiltration und einer Nachbehandlung in einem Autoklaven ein Faserverbund-Bauteil herstellbar ist.

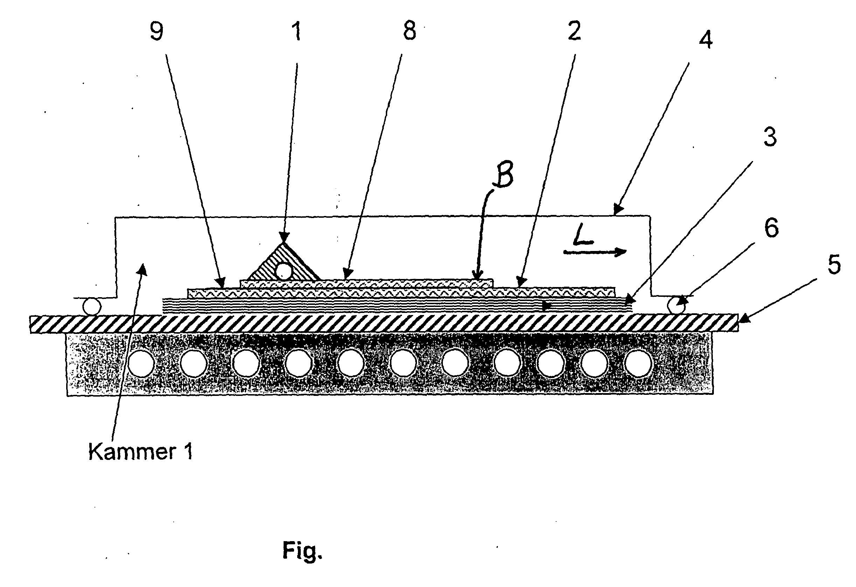

Bei der in der Figur 1 dargestellten Ausführungsform der in einen Aufbau mit dem Faserverbund-Gelege oder einer Bauteil-Herstellungsvorrichtung integrierten Entgasungs-Vorrichtung ist der Aufbau aus zumindest zwei Kammern, wobei nur eine der beiden Kammern, die mit dem Bezugszeichen K1 bezeichnet ist, in der Figur 1 dargestellt ist. Die Kammer K1 ist von einer weiteren Kammer durch eine semi-permeable Folie 4 getrennt, die Gas-durchlässig und Harz oder Matrixmaterial-undurchlässig ist. Auf diese Weise kann nach der Infiltration von Harz in die erste Kammer K1 Luft über die zweite Kammer abgesaugt werden. Die Erfindung kann auch für einen Einkammer-Aufbau (nicht gezeigt) verwendet werden.

Der in der Fig. 1 gezeigte Aufbau mit dem Faserverbund-Gelege oder Injektions-Aufbau umfaßt eine Anguss-Vorrichtung 1 oder einen Zuführkanal von Harz, ein zusätzliches Entgasungsbereichs- oder Anguß-Verteilergewebe 8 sowie eine für das Matrix-Material undurchlässige Schicht oder Sperrschicht 9 in Form einer Folie oder Platte. Die Sperrschicht 9 kann Gas-durchlässig oder Gasundurchlässig sein. Das Anguß-Verteilergewebe 8 ist zwischen der Anguß-Vorrichtung 1 und dem Faserverbund-Halbzeug 3 angeordnet. Die Sperrschicht 9 befindet sich zwischen dem Anguß-Verteilergewebe 8 und dem Faserverbund-Halbzeug 3.

Das Faserverbund-Halbzeug 3 ist auf einer Form 5 oder Auflagevorrichtung 5 gelegen. Eine Form kann zur Bildung einer Außenseite des herzustellenden Faserverbund-Bauteils vorgesehen sein. Eine Auflagevorrichtung 5 kann beispielsweise eine Auflageplatte sein. Vorzugsweise ist zwischen der Sperrfolie 9 und dem Faserverbund-Halbzeug 3 ein weiteres Verteilergewebe gelegen, das nach dem Stand der Technik vorgesehen sein kann, um das Harz über das Faserverbund-Halbzeug 3 zu verteilen. Die erste Kammer des Aufbaus nach der Figur 1 wird gebildet durch die Folie 4, die gegenüber der Form oder der AuflageVorrichtung 5 mittels eines Dichtbandes 6 abgedichtet ist.

Das Verteilergewebe 8 ragt vorzugsweise in einer Richtung (beispielsweise die Richtung L) oder in mehreren Richtungen über die Sperrschicht 9 hinaus. Auf diese Weise kann das vom Anguß-Kanal 1 kommende und zu entgasende Harz durch das diesem zugewandte Verteilergewebe 8 fließen und wird wegen der Sperrschicht 9 zunächst nicht zum Faserverbund-Gelege gelassen. Das Verteilergewebe 8 ist im Bereich der Anguß-Vorrichtung 1 gelegen. Erst wenn das Harz zum bezüglich der Sperrschicht 9 überstehenden Bereich B des Anguß-Verteilergewebes 8 gelangt ist, kann es von dort zum Faserverbund-Halbzeug 3 gelangen, um dieses zu infiltrieren.

Eine derartige Sperrschicht 9 kann aus einer PTFE-Folie, einem Klebstoff und/oder einem Kaschiergewebe oder in Form eines Sandwichaufbaus aus diesen Materialien realisiert sein.

Die Fließhilfe oder das Verteilergewebe 2 zwischen dem Faserverbund-Halbzeug 3 und der Sperrschicht 9 kann in dem Aufbau mit dem Faserverbund-Halbzeug entfallen. Die Sperrschicht 9 kann eine Folie oder eine Platte sein. Als Platte kann sie gebildet werden durch ein Blech oder ein anderes elastisches oder starres Werkzeug.

Bei der Injektion strömt das Matrix-Material zunächst durch die Anguss-Vorrichtung 1 in einen um diesen herum befindlichen Entgasungsbereich. Vom Matrix-Material mitgeführte Gasblasen, gelöste Gase sowie sonstige flüchtige Bestandteile können durch die semipermeable Folie 4 in den evakuierten Bereich (Kammer 2 des VAP-Verfahrens) austreten.

Bei der Sperrschicht 9 kann es sich insbesondere um eine semipermeable Folie, d h. um die Folie, die für Gase durchlässig und für Matrix-Material undurchlässig ist, handeln. Eine derartige semipermeable Folie würde zu Beginn des Injektionsprozesses eine zusätzliche Entgasung in den Bereich der Kammer 1 bewirken. Es ist ebenfalls möglich, als Sperrschicht 9 ein Druckblech zu benutzen, wie es bei der Fertigung mancher Faserverbundbauteile ohnehin benötigt wird.

Das Entgasungs-Verteilergewebe 8 kann in besonderen Anwendungsfällen auch beidseitig überlappend über die Sperrschicht 9 gelegt werden. Das kann jedoch dazu führen, dass sich unter der Sperrschicht 9 zwei Matrix-Materialfronten treffen. Eine derartige Bindenahtsituation sollte möglichst vermieden werden, da im Bindenahtbereich Restluft aus dem nie ganz perfekten technischen Vakuum eingeschlossen werden kann. Dies wiederum kann zu Poren im Bindenahtbereich führen. Die Bildung von Bindenähten unter der Sperrschicht 9 wird dadurch vermieden, dass das Entgasungs- Verteilergewebe 8 nur einseitig auf das Verteilergewebe 2 geführt wird.

Das Matrix-Material steht in dem Entgasungsbereich einseitig oder beidseitig in Kontakt mit einer Harz-undurchlässigen Sperrschicht. Durch diese kann eine Entgasung in einen evakuierten Raum stattfinden. Das Matrix-Material kann wegen der Sperrschicht in dem Entgasungsbereich nicht vor dessen Entgasung in das Fasergelege eintreten.

Bei dem erfindungsgemäßen Verfahren wird das Faserverbund-Halbzeug 3 auf eine Auflagevorrichtung 5 aufgelegt. Auf das Faserverbund-Halbzeug 3 wird zumindest die Sperrschicht 9 und darauf das Anguß-Verteilergewebe 8 gelegt. Anschließend wird über die die Anguß-Vorrichtung 1 Matrixmaterial in die von der Folie 4 gebildete Kammer K1 gelassen, das sich anschließend über das Verteilergewebe 2 über der Sperrschicht 9 in diesem verteilt und von dort um die Sperrschicht herum zum Faserverbund-Halbzeug 3 gelangt. In einem anschließenden Prozeß erfolgt die Infiltrierung des Faserverbund-Halbzeug 3 und die Aushärtung desselben.

## Patentansprüche

1. Injektions-Aufbau mit einem Faserverbund-Halbzeugs (3) zur Herstellung eines Faseverbund-Bauteils mit einer Anguss-Vorrichtung (1) zur Zuführung von Matrixmaterial, einem Verteilergewebe (8) sowie einer für das Matrixmaterial undurchlässigen Sperrschicht (9),
**dadurch gekennzeichnet, daß**
das Verteilergewebe (8) zwischen der Anguß-Vorrichtung (1) und dem Faserverbund-Halbzeug (3) und die Sperrschicht (9) zwischen dem Verteilergewebe (8) und dem Faserverbund-Halbzeug (3) angeordnet sind, wobei das Verteilergewebe (8) zumindest einseitig über die Sperrschicht hinausragt.

2. Injektions-Aufbau mit einem Faserverbund-Halbzeugs (3) zur Herstellung eines Faserverbund-Bauteils nach dem Anspruch 1, **dadurch gekennzeichnet, daß** die Sperrschicht (9) Gas-durchlässig und Matrixmaterial-undurchlässig ist.

3. Injektions-Aufbau mit einem Faserverbund-Halbzeugs (3) zur Herstellung eines Faserverbund-Bauteils nach einem der voranstehenden Ansprüche, **dadurch gekennzeichnet, daß** die Sperrschicht (9) eine Folie oder Platte ist.

4. Injektions-Aufbau mit einem Faserverbund-Halbzeugs (3) zur Herstellung eines Faserverbund-Bauteils nach einem der voranstehenden Ansprüche, **dadurch gekennzeichnet, daß** die Sperrschicht (9) aus einer PTFE-Folie, einem Klebstoff und/oder einem Kaschiergewebe oder in Form eines Sandwichaufbaus aus diesen Materialien realisiert ist.

5. Verfahren zur Herstellung eines Faserverbund-Bauteils aus einem Faserverbund-Halbzeug (3), wobei Matrix-Material einem Aufbau nach einem der Ansprüche 1 bis 5 zugeführt wird, das Matrix-Material durch ein Verteilergewebe (8) oberhalb der Sperrschicht (9) und in dem über die Sperrschicht hinausragenden Teil des Verteilergewebes verteilt wird, so daß das Matrix-Material von dem über die Sperrschicht hinausragenden Teil des Verteilergewebes zum Faserverbund-Halbzeug (3) gelangt und dieses infiltriert.

## Claims

1. Injection structure with a fibre-composite semi-finished product (3) for production of a fibre-composite component with a gate device (1) for the supply of matrix material, a distribution tissue (8) and a barrier layer (9) impermeable to the matrix material, **characterised in that** the distribution tissue (8) is arranged between the gate device (1) and the fibre-composite semi-finished product (3) and the barrier layer (9) is arranged between the distribution tissue (8) and the semi-finished product (3), where the distribution tissue (8) protrudes at least on one side over the barrier layer.

2. Injection structure with a fibre-composite semi-finished product (3) for production of a fibre-composite component according to claim 1,
**characterised in that** the barrier layer (9) is gas-permeable and impermeable to matrix material.

3. Injection structure with a fibre-composite semi-finished product (3) for production of a fibre-composite component according one of the preceding claims, **characterised in that** the barrier layer (9) is a film or plate.

4. Injection structure with a fibre-composite semi-finished product (3) for production of a fibre-composite component according one of the preceding claims, **characterised in that** the barrier layer (9) comprises a PTFE film, an adhesive and/or a laminated tissue or takes the form of a sandwich construction of these materials.

5. Method for production of a fibre-composite component from a fibre-composite semi-finished product (3), where matrix material is supplied to a structure according to one of claims 1 to 5, the matrix material is distributed through a distribution tissue (8) above the barrier layer (9) and in the part of the distribution tissue protruding over the barrier layer so that the matrix material reaches from the part of the distribution tissue protruding over the barrier layer to the fibre-composite semi-finished product (3) and infiltrates this.

## Revendications

1. Structure d'injection avec un produit semi-fini renforcé par fibres (3) pour la fabrication d'une pièce renforcée par fibres, avec un dispositif de carottage (1) pour l'alimentation d'un matériau de matrice, avec un tissu distributeur (8), ainsi qu'avec une couche d'arrêt (9) imperméable au matériau de matrice,
**caractérisée en ce que** le tissu distributeur (8) est disposé entre le dispositif de carottage (1) et le produit semi-fini renforcé par fibres (3) et **en ce que** la couche d'arrêt (9) est disposée entre le tissu distributeur (8) et le produit semi-fini renforcé par fibres (3), le tissu distributeur (8) saillant au moins d'un côté par-dessus la couche d'arrêt.

2. Structure d'injection avec un produit semi-fini renforcé par fibres (3) pour la fabrication d'une pièce renforcée par fibres selon la revendication 1,
**caractérisée en ce que** la couche d'arrêt (9) est perméable au gaz et imperméable au matériau de la matrice.

3. Structure d'injection avec un produit semi-fini renforcé par fibres (3) pour la fabrication d'une pièce renforcée par fibres selon l'une quelconque des revendications précédentes,
**caractérisée en ce que** la couche d'arrêt (9) est un film ou une plaque.

4. Structure d'injection avec un produit semi-fini renforcé par fibres (3) pour la fabrication d'une pièce renforcée par fibres selon l'une quelconque des revendications précédentes,
**caractérisée en ce que** la couche d'arrêt (9) est réalisée en un film de PTFE, en un adhésif ou en un tissu de contrecollage ou sous la forme d'une structure en sandwich composée de ces matériaux.

5. Procédé de fabrication d'une pièce renforcée par fibres à partir d'un produit semi-fini renforcé par fibres (3), du matériau de matrice étant alimenté vers une structure selon l'une quelconque des revendications 1 à 5, le matériau de matrice étant distribué à travers un tissu distributeur (8) au-dessus de la couche d'arrêt (9) et dans la partie du tissu distributeur saillant par-dessus la couche d'arrêt, pour que le matériau de matrice arrive de la partie du tissu distributeur saillant par-dessus la couche d'arrêt dans le produit semi-fini renforcé par fibres (3) et infiltre ce dernier.
